(19) Europäisches Patentamt
European Patent Office
Office européen des brevets

(11) EP 3 608 358 B1

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(51) Int Cl.:
***C08K 3/34*** *(2006.01)* ***C08K 5/524*** *(2006.01)*
***C08L 69/00*** *(2006.01)*

(21) Anmeldenummer: **18188187.1**

(22) Anmeldetag: **09.08.2018**

(54) **MINERALGEFÜLLTE POLYCARBONAT-POLYALKYLENTEREPHTHALAT-ZUSAMMENSETZUNG, FORMMASSE UND FORMKÖRPER MIT GUTER SCHLAGZÄHIGKEIT**

MINERAL-FILLED POLYCARBONATE POLYALKYLENTEREPHTHALATE COMPOSITION, MOLDING MATERIAL AND MOLDED ARTICLE HAVING GOOD IMPACT STRENGTH

COMPOSITION DE POLYALKYLÈNETÉRÉPHTALATE-POLYCARBONATE, MATIÈRE DE MOULAGE ET CORPS MOULÉ PRÉSENTANT UNE BONNE RÉSISTANCE AUX CHOCS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020 Patentblatt 2020/07**

(73) Patentinhaber: **Covestro Intellectual Property GmbH & Co. KG**
**51373 Leverkusen (DE)**

(72) Erfinder:
- **HUFEN, Ralf**
**47239 Duisburg (DE)**
- **FELDERMANN, Achim**
**40597 Düsseldorf (DE)**
- **NOLTE, Marius**
**51065 Köln (DE)**

(74) Vertreter: **Levpat**
**c/o Covestro AG**
**Gebäude 4825**
**51365 Leverkusen (DE)**

(56) Entgegenhaltungen:
**US-A1- 2012 184 662** **US-A1- 2016 215 140**
**US-B2- 8 563 645**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 608 358 B1

Printed by Jouve, 75001 PARIS (FR)

## Beschreibung

Die vorliegende Erfindung eine mineralgefüllte Zusammensetzung auf Basis von Polycarbonat- und Polyalkylenterephthalat zur Erzeugung einer thermoplastischen Formmasse, die Formmasse selbst, die Verwendung der Zusammensetzung oder Formmasse zur Herstellung von Formkörpern und die Formkörper selbst.

Die Formkörper finden vorzugsweise Anwendung im Automobilbau, weiter bevorzugt als Exterior-Bauteil.

Füllstoffhaltige Polycarbonatformmassen (PC-Formmassen), die teilkristalline Polyester und mineralische Füllstoffe enthalten, sind bekannt.

EP 1 992 663 A1 offenbart Polycarbonat-Zusammensetzungen enthaltend einen weiteren Thermoplasten und Talk. Als weitere Thermoplasten sind auch Polyester offenbart. Die Zusammensetzungen zeichnen sich durch eine einfache Herstellung im Extrusionsverfahren, Steifigkeit, Flammschutz, Zähigkeit und thermische Stabilität aus.

US 5,637,643 offenbart Zusammensetzungen enthaltend Polycarbonat, Polyester und oberflächenmodifizierten Talk, sowie einen Antioxidant auf Phosphitbasis. Die Zusammensetzungen zeichnen sich durch gute mechanische Eigenschaften und gute thermische Stabilität aus.

JP 1995-101623 offenbart Zusammensetzungen enthaltend Polycarbonate, Polyester, AcrylatKautschuk und Talk sowie Antioxidant. Die Zusammensetzungen eignen sich zur Herstellung von Fahrzeugteilen und zeichnen sich durch eine hohe Steifigkeit sowie gute Oberflächenglätte aus.

JP 1994-097985 offenabrt Zusammensetzungen enthaltend Polycarbonat, Talk, aromatischen Polyester und organischen Phosphorsäurester. Die Zusammensetzungen haben eine hohe Steifigkeit, gute Oberflächeneigenschaften und hohe Zähigkeit und eignen sich zur Herstellung von Formkörpern mit hoher thermischer Stabilität und mechanischer Stärke.

In der DE-A 19 753 541 werden Polycarbonatformmassen, die teilaromatische Polyester, Pfropfcopolymerisate und mineralische Füllstoffe enthalten, offenbart, die eine für Karosserieaußenteile ausreichende Zähigkeit, aufweisen. Jedoch zeigen die beanspruchten Formmassen unzureichende Wärmeformbeständigkeiten auf.

In EP-A 135 904 werden Polycarbonatformmassen, die Polyethylenterephthalat, Pfropfcopolymerisate auf Polybutadien-Basis und Talk einer Menge bis zu 4 Gew.-% enthalten, beschrieben. Als Vorteil wird eine günstige Eigenschaftskombination aus geringem Verzug ("warpage") und guter Zähigkeit offentbart.

In JP-A 08 176 339 werden Polycarbonatformmassen, die Talk als mineralischen Füllstoff enthalten, beschrieben. ABS-Harze, Polyethylenterephthalat und Polybutylenterephthalat können als weitere Blendpartner eingesetzt werden. Als Vorteil der Formmassen werden gute Schlagzähigkeit und Oberflächenqualität herausgestellt.

In JP-A 07 025 241 werden Polycarbonatformmassen beschrieben, die eine hohe Steifigkeit und gute Oberflächenqualität aufweisen. Die Formmassen enthalten 60 bis 70 Gew.-% Polycarbonat, 20 bis 30 Gew.-% Polyester, 5 bis 10 Gew.-% Acrylatkautschuk und 5 bis 10 Gew.-% Talk sowie 0,1 bis 1 Gew.-Teil (bezogen auf 100 Teile Polymer-Komponenten) Antioxidans.

WO 85/02622 offenbart Polycarbonat-Polyester Zusammensetzungen, die mit phosphorbasierten Säuren gegen Vergilbung stabilisiert werden.

DE2414849 A1 offenbart Mischungen aus Polyesterharz und Polycarbonatharz, die mit Phosphorverbindungen gegen Verfärbung geschützt sind.

EP0417421 A1 offenbart Ester der phosphorigen Säure als Stabilisierungsmittel für Polycarbonat-Polyalkylenterephthala-Zusammensetzungen. US 2012/184662 A1, Absatz [0001] offenbart thermoplastische Zusammensetzungen mit verbesserten MVR und Schlagzähigkeit. Die Beispiele 1-2 und 9-10 beschreiben Zusammensetzungen enthaltend ein aromatisches Polycarbonat, PBT, Talk (Jetfine) und phosphorige Säure.

Karosserieaußenteile aus Kunststoffen müssen in der Regel lackiert werden. Die aufgetragenen Lackschichten müssen in der Regel bei erhöhter Temperatur eingebrannt und ausgehärtet werden. Die dafür benötigte Temperatur und Dauer sind abhängig von den verwendeten Lacksystemen. Das Kunststoffmaterial der Karosserieanbauteile darf während dem Aushärt- bzw. Einbrennvorgang möglichst keine Veränderungen, wie z.B. irreversible Verformungen, aufzeigen. Daher ist es erforderlich, thermoplastische Polycarbonatformmassen mit hoher Wärmeformbeständigkeit bereitzustellen.

In solchen Anwendungen ist es außerdem oft notwendig, eine hohe Steifigkeit in Verbindung mit einem niedrigen thermischen Ausdehnungskoeffizienten (CLTE), also eine hohe Dimensionsstabilität, zu erreichen.

Weitere Anforderungen, die an Karosserieanbauteile aus Kunststoffen gestellt werden, sind gute Zähigkeit bei Schlagbelastung, insbesondere auch bei tiefen Temperaturen.
Die zur Herstellung der Karosserieaußenteile verwendeten Formmassen müssen zudem eine gute Fließfähigkeit in der Schmelze aufweisen.

Bei der Herstellung der Polycarbonat-Polyester Formmassen in der Schmelzecompoundierung und/oder bei der Verarbeitung der Formmassen z.B. im Spritzgussverfahren kommt es häufig zu unerwünschten Umesterungsreaktionen zwischen Polycarbonat und Polyester. Solche Reaktionen treten besonders bei ungünstigen Bedingungen wie hohen Temperaturen, langen Verweilzeiten sowie bei hohen mechanischen Belastungen bei der Schmelzecompoundierung oder im Spritzguss auf.

In der Folge können wichtige Eigenschaften beeinträchtigt werden. So können die Wärmeformbeständigkeit oder Zähigkeit der Formkörper reduziert sein. Außerdem können morphologische Eigenschaften verändert, also das Kristallisationsverhalten des Polyesters gestört und die Glasübergangstemperaturen der Komponenten Polycarbonat und Polyester zu niedrigeren Werten verschoben sein. Es ist daher anstrebenswert, die Umesterungsreaktionen weitgehend zu unterdrücken.

Es war daher wünschenswert, eine Zusammensetzung zur Erzeugung einer thermoplastischen Formmasse bereitzustellen, mit denen sich die beschriebenen Anforderungen erreichen lassen.

Insbesondere war es wünschenswert, eine Zusammensetzung zur Erzeugung einer thermoplastischen Formmasse bereitzustellen, bei der die Formmasse eine gute Schmelzefließfähigkeit aufweist und sich zur Herstellung von Formkörpern mit verbesserter Schlagzähigkeit und guter Wärmeformbeständigkeit eignet.

Bevorzugt sollen weiterhin Umesterungsreaktionen zwischen Polycarbonat und Polyester reduziert werden und so die Wärmeformbeständigkeit und Morphologie auch bei ungünstigen Herstellungs- und Verarbeitungsbedingungen erhalten bleiben.

Überraschend wurde nun gefunden, dass eine Zusammensetzung zur Erzeugung einer thermoplastischen Formmasse, wobei die Zusammensetzung die folgenden Bestandteile enthält oder hieraus besteht:

A) 50 bis 70 Gew.-%, bevorzugt 52 bis 68 Gew.-%, weiter bevorzugt 54 bis 66 Gew.-% mindestens eines aromatisches Polycarbonats,

B) 16 bis 40 Gew.-%, bevorzugt 18 bis 30 Gew.-%, besonders bevorzugt 20 bis 26 Gew.-% mindestens eines Polyalkylenterephthalats,

C) 8 bis 22 Gew.-%, bevorzugt 10 bis 20 Gew.-%, besonders bevorzugt 12 bis 18 Gew.-% mindestens eines mineralischen Füllstoffs auf Basis von Talk,

D) 0,0110 bis 0,0280 Gew.-%, bevorzugt 0,0115 bis 0,0250 Gew.-%, besonders bevorzugt 0,0120 bis 0,0220 Gew.-% phosphorige Säure

E) 0 bis 8,0 Gew.-% bevorzugt 0,1 bis 7 Gew.-%, besonders bevorzugt 0,3 bis 6 Gew.-% mindestens eines Additivs,

die gewünschten Eigenschaften aufweist.

In einer bevorzugten Ausführungsform besteht die Zusammensetzung zu 90 Gew.-%, weiter bevorzugt zu 95 Gew.-% und besonders bevorzugt zu 100 Gew.-% aus den Komponenten A bis E.

In einer bevorzugten Ausführungsform ist die Zusammensetzung frei von kautschukmodifizierten Pfropfpolymerisaten.

In einer bevorzugten Ausführungsform ist die Zusammensetzung frei von Vinyl(Co)-polymerisaten, insbesondere SAN (Styrol-Acrylnitril).

In einer bevorzugten Ausführungsform ist die Zusammensetzung frei von phosphorbasierten Flammschutzmitteln.

In einer bevorzugten Ausführungsform ist die Zusammensetzung frei von Carbonfasern.

Frei von einer Komponente bedeutet, dass weniger als 0,5 Gew.-%, bevorzugt weniger als 0,1 Gew.-%, insbesondere bevorzugt 0 Gew.-% dieser Komponente in der Zusammensetzung enthalten sind.

Das Gewichtsverhältnis von Komponente D zu Komponente B beträgt vorzugsweise 0,0003 : 1 bis 0,0010 : 1 und besonders bevorzugt 0,0004 : 1 bis 0,0008 : 1. Dadurch wird eine besonders vorteilhafte Kombination aus guten mechanischen Eigenschaften und effektiven Unterdrückung der oben beschriebenen Umesterungsreaktionen erreicht.

In einer weiter bevorzugten Ausführungsform beträgt der Anteil der Komponente D 0,0120 bis 0,0160 Gew.-%.

Die einzelnen oben genannten Vorzugsbereiche unterschiedlicher Komponenten und die bevorzugten Ausführungsformen sind frei miteinander kombinierbar.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

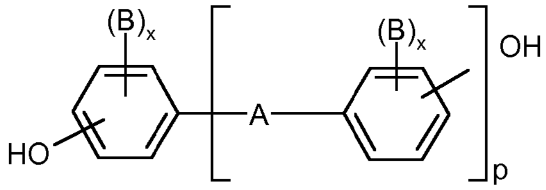

(I),

wobei

A eine Einfachbindung, $C_1$ bis Cs-Alkylen, $C_2$ bis Cs-Alkyliden, $C_5$ bis $C_6$-Cycloalkyliden, - O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

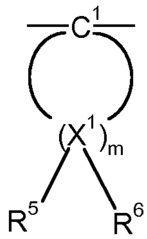

(II)

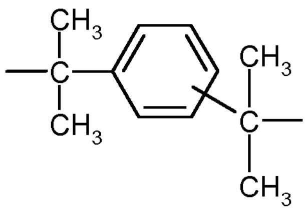

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane,

Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$, gemessen durch GPC (Gelpermeationschromatographie) mit Polycarbonatstandard auf Basis Bisphenol A) von 20 bis 40 kg/mol, vorzugsweise 20 bis 32 kg/mol, besonders bevorzugt 22 bis 28 kg/mol. Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl] -propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte

Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A Polycarbonat auf Basis von Bisphenol A eingesetzt.

**Komponente B**

Erfindungsgemäß wird als Komponente B ein Polyalkylenterephthalat oder eine Mischung von Polyalkylenterephthalaten eingesetzt..

Es handelt sich hierbei in bevorzugter Ausführungsform um Reaktionsprodukte aus Terephthalsäure oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Die Polyalkylenterephthalate enthalten also Struktureinheiten abgeleitet von Terephthalsäure und aliphatischen, cycloaliphatischen oder araliphatischen Diolen.

Unter Polyalkylenterephthalate im Sinne der vorliegenden Erfindung sind auch solche Polyester zu verstehen, die neben Terephthalsäureresten anteilig weitere aromatische, aliphatische oder cycloaliphatische Dicarbonsäuren mit bis zu 50 mol-%, vorzugsweise mit bis zu 25 mol-% enthalten. Dies können z.B. aromatische oder cycloaliphatische Dicarbonsäuren mit 8 bis 14 C-Atomen oder aliphatischer Dicarbonsäuren mit 4 bis 12 C-Atomen enthalten, wie z.B. Phthalsäure, Isophthalsäure, Naphthalin-2,6-dicarbonsäure, 4,4'-Diphenyldicarbonsäure, Bernsteinsäure, Adipinsäure, und Cyclohexandicarbonsäure.

Bevorzugt werden nur Terephthalsäure und Isophthalsäure eingesetzt.

Als Diole werden bei der Herstellung der erfindungsgemäßen Polyalkylenterephthalate beispielsweise Ethylenglykol, Butandiol-1,4 Propandiol-1,3, Tetramethylcyclobutandiol, Isosorbit, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan, 2,2-Bis-(4-hydroxypropoxyphenyl)-propan und deren Mischungen eingesetzt (DE-A 2 407 674, 2 407 776, 2 715 932).

Übliche Bezeichnungen dieser Polyalkylenterephthalate sind z.B. PET, PBT, PETG, PCTG, PEICT, PCT oder PTT.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

In einer bevorzugten Ausführungsform werden als Komponente B Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate eingesetzt.

In einer besonders bevorzugten Ausführungsform wird als Komponente B Polyethylenterephthalat eingesetzt.

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Die vorzugsweise verwendeten Polyalkylenterephthalate besitzen bevorzugt eine intrinsische Viskosität von 0,52 dl/g bis 0,95 dl/g, besonders bevorzugt 0,56 dl/g bis 0,80 dl/g, ganz besonders bevorzugt 0,58 dl/g bis 0,68 dl/g. Zur Bestimmung der intrinsischen Viskosität wird im Ubbelohde-Viskosimeter zunächst die spezifische Viskosität in Dichloressigsäure gemessen in einer Konzentration von 1 Gew.-% bei 25°C gemäß DIN 53728-3.

Die ermittelte intrinsische Viskosität wird dann berechnet aus der gemessenen spezifischen Viskosität x 0,0006907 + 0,063096 (x bedeutet eine Multiplikation).

Durch die Polyalkylenterphthalate mit der bevorzugten intrinsischen Viskosität wird in den erfindungsgemäßen Zusammensetzungen eine vorteilhafte Balance aus mechanischen und rheologischen Eigenschaften erreicht.

Die Polyalkylenterephthalate lassen sich nach bekannten Methoden herstellen (s. z.B. Kunststoff-Handbuch,

Band VIII, S. 695 ff., Carl-Hanser-Verlag, München 1973).

## Komponente C

Als Komponente C enthalten die thermoplastischen Formmassen Talk und/oder mineralische Füllstoffe auf Basis von Talk als Verstärkungsstoff oder eine Mischung der vorhergenannten Verstärkungsstoffe und mindestens einem weiterern Verstärkungsstoff nicht auf Basis von Talk. Der weitere Verstärkungsstoff ist ausgewählt aus der Gruppe bestehend aus Glimmer, Silikat, Quarz, Titandioxid, Kaolin, amorphe Kieselsäuren, Magnesiumcarbonat, Kreide, Feldspat, Bariumsulfat, Glaskugeln, Keramikkugeln, Wollastonit und Glasfasern.
In bevorzugter Ausführungsform ist Talk oder ein mineralischer Füllstoff auf Basis von Talk alleiniger Verstärkungsstoff.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-%, bezogen auf die Gesamtmasse an Füllstoff aufweisen.

Unter Talk wird ein natürlich vorkommender oder synthetisch hergestellter Talk verstanden. Reiner Talk hat die chemische Zusammensetzung $3\ MgO \cdot 4\ SiO_2 \cdot H_2O$ und somit einen MgO-Gehalt von 31,9 Gew.-%, einen $SiO_2$-Gehalt von 63,4 Gew.-% und einen Gehalt an chemisch gebundenem Wasser von 4,8 Gew.-%. Es handelt sich um ein Silikat mit Schichtstruktur.
Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Besonders bevorzugte als Komponente C zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%.

Die besonders bevorzugten Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße dso von 0,1 bis 20 $\mu$m, bevorzugt 0,2 bis 10 $\mu$m, weiter bevorzugt 0,5 bis 5 $\mu$m, noch weiter bevorzugt 0,7 bis 2,5 $\mu$m, und besonders bevorzugt 1,0 bis 2,0 $\mu$m.

Die erfindungsgemäß einzusetzenden mineralischen Füllstoffe auf Basis von Talk haben bevorzugt eine obere Teilchen- bzw. Korngröße $d_{95}$ kleiner 10 $\mu$m, bevorzugt kleiner 7 $\mu$m, besonders bevorzugt kleiner 6 $\mu$m und insbesondere bevorzugt kleiner 4,5 $\mu$m. Die $d_{95}$- und $d_{50}$-Werte von den Füllstoffen werden nach Sedimentationsanalyse mit SEDIGRAPH D 5 000 nach ISO 13317-3 bestimmt.
Die mineralischen Füllstoffe auf Basis von Talk können optional oberflächenbehandelt sein, um eine bessere Ankopplung an die Polymermatrix zu erzielen. Sie können beispielsweise mit einem Haftvermittlersystem auf Basis funktionalisierter Silane ausgerüstet sein.

Das mittlere Aspektverhältnis (Durchmesser zu Dicke) der teilchenförmigen Füll-stoffe liegt bevorzugt im Bereich 1 bis 100, besonders bevorzugt 2 bis 25 und insbe-sondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Die teilchenförmigen Füllstoffe können bedingt durch die Verarbeitung zur Formmasse bzw. zu Formkörpern in der Formmasse bzw. im Formkörper einen kleineren $d_{95}$- bzw. dso-Wert aufweisen, als die ursprünglich eingesetzten Füllstoffe.

## Komponente D

Die Zusammensetzung enthält als Komponente D phosphorige Säure $H_3PO_3$. Die phosphorige Säure kann als Feststoff oder als wässrige Lösung verwendet werden. Bevorzugt ist der Einsatz als Feststoff. In den erfindungsgemäßen Zusammensetzungen wird dadurch eine Verbesserung der Stabilität der eingesetzten Polymerkomponenten während der Compoundierung und damit eine Verbesserung der mechanischen Eigenschaften der Zusammensetzung erreicht. Außerdem ist gegenüber einer wässrigen Säurelösung die Dosierung in das Compoundierungsaggregat erleichtert und es reduziert sich zusätzlich das Risiko einer möglichen Korrosion der Maschinenteile deutlich.

Die Komponente D kann auch an einem organischen oder anorganischen Adsorber oder Absorber gebunden

und in dieser Form eingesetzt werden. Dazu wird beispielsweise vor der Compoundierung der Zusammensetzung die Komponente D mit dem Adsorber oder Absorber vorgemischt, bis ein rieselfähiges Pulver entsteht. Bei diesen Absorbern oder Adsorbern handelt es sich bevorzugt um feinteilige und/oder poröse Materialien mit großer äußerer und/oder innerer Oberfläche.

Bevorzugt handelt es sich bei diesen Materialien um thermisch inerte anorganische Materialien wie beispielsweise Oxide oder Mischoxide, Silikate, Silika, Sulfide, Nitride von Metallen beziehungsweise Übergangsmetallen. In einer besonders bevorzugten Ausführungsform handelt es sich dabei um feinteilige und/oder mikroporöse Kieselsäuren beziehungsweise Siliziumoxide oder Silikate natürlichen oder synthetischen Ursprungs.

Es ist weiterhin möglich, dass die phosphorige Säure in Form eines Masterbatches auf Basis Polycarbonat oder Polyester eingesetzt wird. Masterbatch bedeutet, dass die phosphorige Säure in gegenüber der geplanten Einsatzkonzentration in der Zusammensetzung höherer Menge mit dem Thermoplasten (Polycarbonat oder Polyester) vorgemischt wird. Diese Mischung wird dann der Zusammensetzung in einer entsprechenden Menge zugegeben, so dass die gewünschte Säurekonzentration in der Zusammensetzung erreicht wird.

## Komponente E

Die Zusammensetzung kann als Komponente E handelsübliche Polymeradditive enthalten.
Als handelsübliche Polymeradditive gemäß Komponente E kommen Additive wie beispielsweise interne und externe Gleit- und Entformungsmittel (beispielsweise Pentaerythrittetrastearat, Montanwachs oder Polyethylenwax), Leitfähigkeitsadditive (beispielsweise Leitruß oder Carbon Nanotubes), UV/Licht-Schutzmittel, Stabilisatoren (beispielsweise, Thermostabilisatoren, Nukleierungsmittel (z.B. Natriumphenylphosphinat, Aluminiumoxid, Siliziumdioxid, Salze aromatischer Carbonsäuren), Antioxidantien, Umesterungsinhibitoren, Hydrolyseschutzmittel), kratzfestigkeitsverbessernde Additive (beispielsweise Silikonöle), IR-Absorbentien, optische Aufheller, fluoreszierende Additive, sowie Farbstoffe und Pigmente (beispielsweise Titandioxid, Ultramarinblau, Eisenoxid, Ruß, Phthalocyanine, Chinacridone, Perylene, Nigrosin und Anthrachinone) und Füll- und Verstärkungsstoffe verschieden von Komponente C), oder aber Mischungen mehrerer der genannten Additive in Frage.

Bevorzugt enthalten die Zusammensetzungen keine von Komponente C verschiedene Füll- und Verstärkungsstoffe.

Die erfindungsgemäßen Zusammensetzungen enthalten bevorzugt mindestens ein Entformungsmittel, vorzugsweise Pentaerythrittetrastearat.

In einer bevorzugten Ausführungsform enthält die Zusammensetzung als Komponente E mindestens einen Zusatzstoff ausgewählt aus der Gruppe, die, Gleit- und Entformungsmittel, UV/Licht-Schutzmittel, Stabilisatoren, Antistatika, Farbstoffe, Pigmente und Füll- und Verstärkungsstoffe verschieden von Komponente C) umfasst.

Die Additive können alleine oder in Mischung bzw. in Form von Masterbatchen eingesetzt werden.

## Herstellung der Formmassen und Formkörper

Aus den erfindungsgemäßen Zusammensetzungen können thermoplastische Formmassen hergestellt werden. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 310°C, ganz besonders bevorzugt bei 260°C bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erfindungsgemäßen Formmassen können zur Herstellung von Formkörpern und Halbzeugen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Als Beispiele für Halbzeuge seien Platten genannt.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen

hergestellt werden können, sind Folien, Profile, Gehäuseteile jeder Art, für Büromaschinen wie Monitore, Flatscreens, Notebooks, Drucker, Kopierer; Platten, Rohre, Elektroinstallationskanäle, Fenster, Türen und weitere Profile für den Bausektor sowie Elektro- und Elektronikteile wie Schalter, Stecker und Steckdosen und Bauteile für Fahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die vorliegende Erfindung betrifft weiterhin aus den oben genannten Zusammensetzungen hergestellte Formkörper, vorzugsweise flächige Formteile wie Platten und Karosserieteile wie Spiegelgehäuse, Kotflügel, Spoiler, Hauben, etc.

Die Formkörper können klein- oder großteilig sein und für Außen- oder Innenanwendungen eingesetzt werden. Bevorzugt werden großteilige Formteile für den Fahrzeugbau, insbesondere den Automobilsektor hergestellt. Insbesondere können aus den erfindungsgemäßen Formmassen Karosserieaußenteile wie z.B. Kotflügel, Heckklappen, Motorhauben, Stoßstangen, Ladeflächen, Abdeckungen für Ladeflächen, Autodächer oder andere Karosserieanbauteile gefertigt werden.

Formkörper bzw. Halbzeuge aus den erfindungsgemäßen Formmassen/Zusammensetzungen können sich auch im Verbund mit weiteren Werkstoffen wie z.B. Metall oder Kunststoff befinden. Nach einer eventuellen Lackierung von z.B. Karosserieaußenteilen können sich Lackschichten direkt auf den erfindungsgemäßen Formmassen und/oder auf den im Verbund eingesetzten Werkstoffen befinden. Die erfindungsgemäßen Formmassen bzw. die Formteile/Halbzeuge aus den erfindungsgemäßen Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkststoffen oder sich selbst für die Herstellung von Fertigteilen wie z.B. Karosserieaußenteilen eingesetzt werden.

Die erfindungsgemäßen Zusammensetzungen zeichnen sich durch eine ausgezeichnete Wärmeformbeständigkeit und Wärmeformstabilität aus. Die erfindungsgemäßen Zusammensetzungen weisen zusätzlich einen geringen CLTE , in Kombination mit guter Schlagzähigkeit, hohem E-Modul, guter Fließfähigkeit, hoher Wärmeformbeständigkeit und reduziertem Schwindungsverhalten bei der thermoplastischen Verarbeitung.

## Beispiele

### Komponente A

Lineares Polycarbonat auf Basis Bisphenol-A mit einem Molekulargewicht von 24 kg/mol (Gewichtsmittel $M_w$, gemessen durch GPC (Gelpermeationschromatographie) mit Polycarbonatstandard auf Basis Bisphenol A).

### Komponente B

Polyethylenterephthalat (z.B. PET der Fa. Invista, Deutschland) mit einer intrinsischen Viskosität von 0,623 dl/g. Die spezifische Viskosität wird gemessen in Dichloressigsäure in einer Konzentration von 1 Gew.-% bei 25°C. Die intrinsische Viskosität wird aus der spezifischen Viskosität gemäß nachstehender Formel berechnet.

$$\text{Intrinsische Viskosität} = \text{Spezifische Viskosität x } 0{,}0006907 + 0{,}063096$$

### Komponente C

Talk mit einem mittleren Partikeldurchmesser dso von 1,2 $\mu$m und einem $d_{95}$ von 3,5 $\mu$m gemessen mittels Sedigraph und mit einem $Al_2O_3$-Gehalt von 0,5 Gew.-%.

### Komponente D

Phosphorige Säure $H_3PO_3$ als Feststoff

**Komponente E-1**

Ruß Black Pearls™ 800

**Komponente E-2**

Montansäureesterwachs (Licowax™ E) als Gleit-/Entformungsmittel

**Komponente E-3**

Pentaerythrittetrastearat als Gleit-/Entformungsmittel

**Herstellung der Formmassen**

Die erfindungsgemäßen Formmassen, enthaltend die Komponenten A bis E werden hergestellt auf einem Doppelwellenextruder ZSK25 der Fa. Coperion, Werner und Pfleiderer (Deutschland) bei Schmelzetemperaturen von 270°C bis 290°C.

**Herstellung der Prüfkörper und Prüfung**

Die aus der jeweiligen Compoundierung resultierenden Granulate wurden auf einer Spritzgussmaschine (z. B. Fa. Arburg) bei einer Schmelzetemperatur von 270°C und einer Werkzeugtemperatur von 70°C zu Probekörpern verarbeitet.

Die **Schmelzefließfähigkeit** wird beurteilt anhand der Schmelzevolumenfließrate (MVR) gemessen gemäß ISO 1133 (Version von 2012) bei einer Temperatur von 270°C und mit einer Stempellast von 5 kg.

Die **Wärmeformbeständigkeit** wurde gemessen gemäß DIN ISO 306 (Vicat-Erweichungstemperatur, Verfahren B mit 50 N Belastung und einer Heizrate von 120 K/h, Version von 2013) an einem einseitig angespritzten Prüfstab der Dimension 80x10x4 mm.

Die Bestimmung der **Schlagzähigkeit** erfolgt gemäß ISO 180/1U (Version von 1982) bei Raumtemperatur (23°C) bzw. -30°C durch eine 10-fach-Bestimmung an Prüfstäben der Abmessung 80 mm x 10 mm x 4 mm.

Die folgenden Beispiele dienen der weiteren Erläuterung der Erfindung

**Tabelle 1**

| **Komponente (Gewichtsteile)** | | **V1** | **2** | **3** | **4** | **V5** |
|---|---|---|---|---|---|---|
| A PC | | 61,4 | 61,4 | 61,4 | 61,4 | 61,4 |
| B PET | | 22,6 | 22,6 | 22,6 | 22,6 | 22,6 |
| C Talk | | 15,0 | 15,0 | 15,0 | 15,0 | 15,0 |
| D H3PO3 | | 0,0100 | 0,0125 | 0,0150 | 0,0200 | 0,0300 |
| E-1 Ruß | | 0,45 | 0,45 | 0,45 | 0,45 | 0,45 |
| E-21 Licowax | | 0,2 | 0,2 | 0,2 | 0,2 | 0,2 |
| E-3 PETS | | 0,37 | 0,37 | 0,37 | 0,37 | 0,37 |
| **Eigenschaften** | Einheit | | | | | |
| Vicat | °C | 143 | 142 | 143 | 143 | 143 |
| MVR | $cm^3/10min$ | 34 | 35 | 33 | 34 | 37 |
| Izod Schlagzähigkeit 23°C | $kJ/m^2$ | 64 | 89 | 85 | 74 | 65 |
| Izod Schlagzähigkeit -30°C | $kJ/m^2$ | 67 | 69 | 71 | 70 | 64 |

Aus Tabelle 1 geht hervor, dass die erfindungsgemäßen Zusammensetzungen die Herstellung von Formmassen mit guter Fließfähigkeit (MVR) und Formkörpern mit einer hohen Wärmeformbeständigkeit (Vicat) in Verbindung bei verbesserter Schlagzähigkeit bei Raumtemperatur und bei -30°C ermöglichen. Ist die Konzentration der Komponente D außerhalb des beanspruchten Bereichs, ist die Schlagzähigkeit nicht ausreichend. Ganz besonders bevorzugt sind

die Zusammensetzungen gemäß den Beispielen 2 und 3, bei denen die Schlagzähigkeit bei 23°C am meisten verbessert ist.

## Patentansprüche

1. Zusammensetzung zur Erzeugung einer thermoplastischen Formmasse, wobei die Zusammensetzung die folgenden Bestandteile enthält oder hieraus besteht:

   A) 50 bis 70 Gew.-% mindestens eines aromatisches Polycarbonats,
   B) 16 bis 40 Gew.-% Gew.-% mindestens eines Polyalkylenterephthalats,
   C) 8 bis 22 Gew.-% mindestens eines mineralischen Füllstoffs auf Basis von Talk,
   D) 0,0110 bis 0,0280 Gew.-% phosphorige Säure,
   E) 0 bis 8,0 Gew.-% mindestens eines Additivs.

2. Zusammensetzung gemäß Anspruch 1, **dadurch gekennzeichnet, dass** die Komponente A ein gewichtsgemitteltes Molekulargewicht $M_w$ bestimmt durch Gelpermeationschromatographie in Methlylenchlorid mit Polycarbonat auf Basis von Bisphenol A als Standard von 22 bis 28 kg/mol aufweist.

3. Zusammensetzung gemäß Anspruch 1 oder 2, **dadurch gekennzeichnet, dass** Komponente B ausgewählt ist aus der Gruppe bestehend aus Polyethylenterephthalaten und Polybutylenterephthalaten.

4. Zusammensetzung gemäß Anspruch 3, **dadurch gekennzeichnet, dass** als Komponente B ein Polyethylenterephthalat mit einer intrinsischen Viskosität von 0,58 dl/g bis 0,68 dl/g eingesetzt wird, wobei die intrisische Viskosität wie in der Beschreibung angegeben gemessen wird.

5. Zusammensetzung gemäß einem der vorherigen Ansprüche, **dadurch gekennzeichnet, dass** als Komponente C ein Talk mit einem $Al_2O_3$-Gehalt von weniger als 0,7 Gew.-% eingesetzt wird.

6. Zusammensetzung gemäß einem der vorhergehenden Ansprüche, **dadurch gekennzeichnet, dass** die Komponente C) eine obere Korngröße $d_{95}$ kleiner 6 $\mu$m aufweist.

7. Zusammensetzung gemäß einer der vorherigen Ansprüche, **dadurch gekennzeichnet, dass** Komponente D als Feststoff eingesetzt wird.

8. Zusammensetzung gemäß einem der vorhergehenden Ansprüche, **dadurch gekennzeichnet, dass** das Gewichtsverhältnis von Komponente D zu Komponente B 0,0003 : 1 bis 0,0010 : 1 beträgt.

9. Zusammensetzung gemäß einem der vorherigen Ansprüche enthaltend keine von Komponente C verschiedene Füll- und Verstärkungsstoffe.

10. Zusammensetzung gemäß einem der vorherigen Ansprüche, enthaltend oder bestehend aus

    54 bis 66 Gew.-% der Komponente A,
    20 bis 26 Gew.-% der Komponente B,
    12 bis 18 Gew.-% der Komponente C
    0,0120 bis 0,0220 Gew.-% der Komponente D
    0,3 bis 6 Gew.-% der Komponente E.

11. Zusammensetzung gemäß einem der vorherigen Ansprüche bestehend aus den Komponenten A bis E.

12. Verfahren zur Herstellung einer Formmasse, **dadurch gekennzeichnet, dass** die Bestandteile einer Zusammensetzung nach einem der Ansprüche 1 bis 11 bei einer Temperatur von 200 bis 320 °C miteinander vermischt und anschließend abgekühlt und granuliert werden.

13. Formmasse, erhältlich nach einem Verfahren nach Anspruch 12.

14. Verwendung einer Zusammensetzung nach einem der Ansprüche 1 bis 11 oder einer Formmasse nach Anspruch

13 zur Herstellung von Formkörpern.

15. Formkörper, erhältlich aus einer Zusammensetzung nach einem der Ansprüche 1 bis 11 oder aus einer Formmasse nach Anspruch 13.

## Claims

1. Composition for producing a thermoplastic molding compound, wherein the composition contains or consists of the following constituents:

   A) 50% to 70% by weight of at least one aromatic polycarbonate,
   B) 16% to 40% by weight of at least one polyalkylene terephthalate,
   C) 8% to 22% by weight of at least one talc-based mineral filler,
   D) 0.0110% to 0.0280% by weight of phosphorous acid,
   E) 0% to 8.0% by weight of at least one additive.

2. Composition according to Claim 1, **characterized in that** the component A has a weight-average molecular weight $M_w$, determined by gel permeation chromatography in methylene chloride using polycarbonate based on bisphenol A as a standard, of 22 to 28 kg/mol.

3. Composition according to Claim 1 or 2, **characterized in that** component B is selected from the group consisting of polyethylene terephthalates and polybutylene terephthalates.

4. Composition according to Claim 3, **characterized in that** a polyethylene terephthalate having an intrinsic viscosity of 0.58 dl/g to 0.68 dl/g is employed as component B, wherein the intrinsic viscosity is measured as stated in the description.

5. Composition according to any of the preceding claims, **characterized in that** a talc having an $Al_2O_3$ content of less than 0.7% by weight is employed as component C.

6. Composition according to any of the preceding claims, **characterized in that** component C) has an upper grain size $d_{95}$ of less than 6 $\mu$m.

7. Composition according to any of the preceding claims, **characterized in that** component D is employed as a solid.

8. Composition according to any of the preceding claims, **characterized in that** the weight ratio of component D to component B is 0.0003: 1 to 0.0010: 1.

9. Composition according to any of the preceding claims containing no fillers and reinforcers distinct from component C.

10. Composition according to any of the preceding claims containing or consisting of

    54% to 66% by weight of the component A,
    20% to 26% by weight of the component B,
    12% to 18% by weight of the component C,
    0.0120% to 0.0220% by weight of the component D,
    0.3% to 6% by weight of the component E.

11. Composition according to any of the preceding claims consisting of components A to E.

12. Process for producing a molding compound, **characterized in that** the constituents of a composition according to any of Claims 1 to 11 are mixed with one another at a temperature of 200°C to 320°C and subsequently cooled and pelletized.

13. Molding compound obtainable by a process according to Claim 12.

14. Use of a composition according to any of Claims 1 to 11 or of a molding compound according to Claim 13 for

production of molded articles.

**15.** Molded article obtainable from a composition according to any of Claims 1 to 11 or from a molding compound according to Claim 13.

**Revendications**

**1.** Composition pour produire une masse de moulage thermoplastique, la composition contenant les constituants suivants ou étant constituée par ceux-ci :

A) 50 à 70% en poids d'au moins un polycarbonate aromatique,
B) 16 à 40% en poids d'au moins un poly(téréphtalate d'alkylène),
C) 8 à 22% en poids d'au moins une charge minérale à base de talc,
D) 0,0110 à 0,0280% en poids d'acide phosphoreux,
E) 0 à 8,0% en poids d'au moins un additif.

**2.** Composition selon la revendication 1, **caractérisée en ce que** le composant A présente un poids moléculaire moyen en poids $M_w$, déterminé par chromatographie par perméation de gel dans du chlorure de méthylène avec un polycarbonate à base de bisphénol A en tant que témoin, de 22 à 28 kg/mole.

**3.** Composition selon la revendication 1 ou 2, **caractérisée en ce que** le composant B est choisi dans le groupe constitué de poly(téréphtalates d'éthylène) et de poly(téréphtalates de butylène).

**4.** Composition selon la revendication 3, **caractérisée en ce qu'**un poly(téréphtalate d'éthylène) présentant une viscosité intrinsèque de 0,58 dl/g à 0,68 dl/g est utilisé en tant que composant B, la viscosité intrinsèque étant mesurée comme indiqué dans la description.

**5.** Composition selon l'une quelconque des revendications précédentes, **caractérisée en ce qu'**un talc présentant une teneur en $Al_2O_3$ inférieure à 0,7% en poids est utilisé en tant que composant C.

**6.** Composition selon l'une quelconque des revendications précédentes, **caractérisée en ce que** le composant C) présente une grosseur supérieure de particule $d_{95}$ inférieure à 6 $\mu$m.

**7.** Composition selon l'une quelconque des revendications précédentes, **caractérisée en ce que** le composant D) est utilisé sous forme de solide.

**8.** Composition selon l'une quelconque des revendications précédentes, **caractérisée en ce que** le rapport pondéral du composant D au composant B vaut 0,0003:1 à 0,0010:1.

**9.** Composition selon l'une quelconque des revendications précédentes, ne contenant pas de charges ni de substances de renforcement différentes du composant C.

**10.** Composition selon l'une quelconque des revendications précédentes, contenant ou constituée par

- 54 à 66% en poids du composant A,
- 20 à 26% en poids du composant B,
- 12 à 18% en poids du composant C,
- 0,0120 à 0,0220% en poids du composant D,
- 0,3 à 6% en poids du composant E.

**11.** Composition selon l'une quelconque des revendications précédentes, constituée par les composants A à E.

**12.** Procédé pour la préparation d'une masse de moulage, **caractérisé en ce que** les constituants d'une composition selon l'une quelconque des revendications 1 à 11 sont mélangés les uns avec les autres à une température de 200 à 320°C et ensuite refroidis et granulés.

**13.** Masse de moulage, pouvant être obtenue selon un procédé selon la revendication 12.

**14.** Utilisation d'une composition selon l'une quelconque des revendications 1 à 11 ou d'une masse de moulage selon la revendication 13 pour la fabrication de corps moulés.

**15.** Corps moulés, pouvant être obtenus à partir d'une composition selon l'une quelconque des revendications 1 à 11 ou à partir d'une masse de moulage selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1992663 A1
- US 5637643 A
- JP 7101623 A
- JP 6097985 A
- DE 19753541 A
- EP 135904 A
- JP 08176339 A
- JP 07025241 A
- WO 8502622 A
- DE 2414849 A1
- EP 0417421 A1
- US 2012184662 A1
- DE AS1495626 B
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE 2407674 A
- DE 2407776
- DE 2715932
- DE 1900270 A
- US PS3692744 A


### In der Beschreibung aufgeführte Nicht-Patentliteratur


- **SCHNELL.** Chemistry and Physics of Polycarbonates. Interscience Publishers, 1964
- Kunststoff-Handbuch. Carl-Hanser-Verlag, 1973, vol. VIII, 695 ff